# EUROPÄISCHE PATENTSCHRIFT

(11) **EP 0 811 311 B1**
(45) Veröffentlichungstag und Bekanntmachung des Hinweises auf die Patenterteilung: **12.09.2001**
(21) Anmeldenummer: 97108739.0
(22) Anmeldetag: 02.06.1997
(51) Int. Cl.: A01C 5/06

(54) **Furchenöffner und Pflanzeinheit mit einem Furchenöffner**
Seedcoulter and planter with seedcoulter
Soc et semoir avec soc

(30) Priorität: 03.06.1996 US 659054
(43) Veröffentlichungstag der Anmeldung: 10.12.1997
(73) Patentinhaber: DEERE & COMPANY, Moline, Illinois 61265-8098 (US)
(72) Erfinder: Bergland, Norman Robert, Moline, Illinois 61265 (US); Yoder, Alfred Dean, Geneseo, Illinois 61254 (US)
(74) Vertreter: Feldmann, Bernhard

(56) Entgegenhaltungen:
- FR-A- 1 235 304
- FR-A- 2 085 037
- US-A- 5 271 343
- US-A- 5 622 124

## Beschreibung

Die Erfindung betrifft einen Furchenöffner mit mehreren von einem Rahmen getragenen Scharen, die zwischen sich ein Saatgutrohr aufnehmen und eine Pflanzeinheit mit einem solchen Furchenöffner.

Gemäß der FR-2.085.037 ist eine Säeinheit mit einem Furchenöffner mit konvergierenden Scharen, einem Saatgutrohr und einem Furchenformer versehen, die gemeinsam an einem Halter angebracht sind und von einem Rahmen vertikal beweglich getragen werden. Der Furchenformer ist keilförmig ausgebildet und mit einem sich vertikal erstreckenden Hohlraum versehen, an dessen Oberseite das Saatgutrohr ein- und an dessen Unterseite das Saatgut austritt. Der Furchenformer ist mittels eines Halters vertikal und quer zur Fahrtrichtung schwenkbar an dem Furchenöffner angebracht. Der Halter enthält zwei Laschen und eine sich durch diese erstreckende Schwenkwelle, die nach einer Demontage einer Lasche entnehmbar ist. Diese Säeinheit ist insofern nachteilig, als einerseits der Halter und der Furchenformer relativ aufwendig gestaltet und schwer zu demontieren sind, während andererseits das Saatgutrohr relativ geringfügig geführt ist.

Die US-A-4,915,258 offenbart eine Pflanzeinheit mit einem Furchenöffner, der zwei konvergierend zueinander verlaufende Schneidscheiben enthält, zwischen denen ein Saatgutrohr zu der im Zwischenraum zwischen den Scheiben gebildeten Furche verläuft. Aufgrund der Anordnung der Scheiben ist nicht auszuschließen, daß das Saatgutrohr auf noch vorhandenes Erdreich trifft und verbogen wird.

Die US-A-5,033,398 und die US-A-4,520,742 zeigen und beschreiben ein feststehendes Schar zum Anlegen einer Furche, an dessen vertikalem Schaft ein unterer starrer Abschnitt eines Saatgutrohrs fest angeschraubt ist. Auf diesen starren Abschnitt ist ein flexibler Schlauch aufgesetzt, der zu einem Saatgutverteiler führt. Diese Ausführung schützt zwar insbesondere den starren Teil des Saatgutrohrs, ist aber ziemlich robust und aufwendig ausgebildet. Somit kann bei einem Schaden der Halter des starren Abschnitts und der starre Abschnitt nur umständlich demontiert werden, um z. B. eine Verstopfung zu beseitigen.

Nach der US-A-5,092,255 führt ebenfalls ein flexibles Saatgutrohr zwischen zwei divergierend verlaufenden Scheiben eines Furchenöffners und ist dort auf ein festes Saatgutrohr aufgesetzt, das starr an einem Rahmen befestigt ist. Ein solcher Aufbau ist sehr aufwendig und schwer.

Aus der US-A-4,388,878 geht ein starres Schar als Furchenöffner hervor, in dessen Schattenbereich drei Schläuche in die Furche münden, die der Ablage von Saatgut, Düngemittel und Schädlingsbekämpfungsmittel dienen. Diese Schläuche sind mit Schlauchklemmen befestigt und nach hinten offen. Bei dieser Anordnung ist eine Demontage der Schläuche zur Reinigung oder Wartung ebenfalls nur schwer möglich.

Das der Erfindung zugrunde liegende Problem wird darin gesehen, daß die bekannten Saatgutrohrhalter aufwendig sind und eine einfache Wartung des Säschars und/oder des Särohrs kaum ermöglichen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann mittels eines einfachen Steckteils das Saatgutrohr zwischen den Scharen gehalten werden, so daß es nicht an diesen scheuert und beschädigt wird. Der Halter ist so leicht zu entfernen, daß das Saatgutrohr bzw. ein an seinem Ende vorgesehenes Säschar bei Verstopfung schnell und ohne Werkzeug demontiert und gereinigt werden können.

Bei weit auseinander stehenden Scharen des Furchenöffners und/oder zu erwartenden rauhen Betriebsbedingungen kann das Saatgutrohr mittels eines vorzugsweise aus Stahl gebildeten Schutzes der direkte Kontakt zwischen Saatgutrohr und Boden vermieden werden.

Eine formschlüssige Verbindung des Halters mit dem Schutz oder dem Rahmen kann durch dessen spezielle Formgebung oder mittels eines oder mehrerer Ausschnitte in dem Halter erreicht werden, der bzw. die so beschaffen ist/sind, daß der Schutz oder Rahmen lagegesichert umfaßt werden kann.

Eine sehr kostengünstige Ausführung eines Halters wird erreicht, wenn dieser aus Kunststoff hergestellt wird. Aufgrund seines Gewichts, seiner Korrosionsbeständigkeit und seiner Elastizität eignet sich Kunststoff hervorragend für die Halterung eines Saatgutrohrs im rauhen Betrieb und gewährleistet eine gute Montierbarkeit.

Zusätzlich oder anstatt zu der formschlüssigen Verbindung zwischen dem Halter und dem Rahmen bzw. dem Schutz, kann auch eine kraftschlüssige Verbindung treten, die dadurch erreicht wird, daß Teile des Halters, nämlich dessen Halteplatten oder Führungselemente unter Vorspannung an dem Saatgutrohr bzw. dem Schutz oder dem Rahmen angreifen.

Eine sichere Festlegung des Halters an dem Rahmen oder Schutz wird durch die Verwendung einer sich seitlich, d. h. horizontal oder im wesentlichen horizontal erstreckenden Schulter, Rippe, Steg oder dergleichen erreicht, worauf der Halter aufsitzen kann. Zur Lagepositionierung und Arretierung dient wenigstens ein Ausschnitt, mit dessen Hilfe die Schulter oder dergl. übergriffen werden kann.

Eine Pflanzeinheit, d. h. eine Vorrichtung zur fein dosierten Abgabe von Saat- bzw. Pflanzgut, möglichst sogar mit Einzelkornabgabe wird dann benutzt, wenn eine hohe Ausbringqualität erwartet wird. Folglich trägt die Verwendung eines Furchenöffners, der nicht mit den Nachteilen des Standes der Technik behaftet ist, zur Sicherstellung eines guten Pflanzergebnisses bei.

Die Pflanzqualität wird weiter erhöht, wenn eine saubere Furchenöffnung möglich ist, wozu ein Scheibensech verwendet wird, und das Erdreich mit dem Saatgut mittels Andrückrädern gefestigt wird.

In der Zeichnung ist ein nachfolgend näher beschriebenes Ausführungsbeispiel der Erfindung dargestellt. Es zeigt:
- Fig. 1: eine Pflanzeinheit mit einem Saatgutrohr und einem Halter in Seitenansicht,

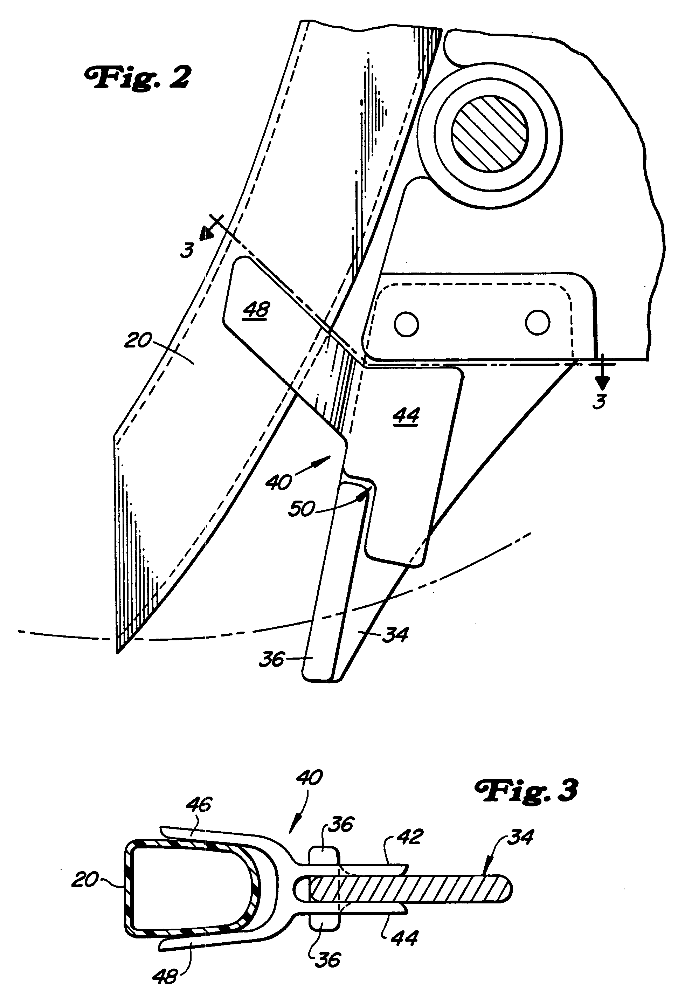

- Fig. 2: den Halter in einer vergrößerten Darstellung in Seitenansicht,
- Fig. 3: einen Schnitt entlang der Linie 3-3 in Figur 2 und in Blickrichtung der dazugehörigen Pfeile und
- Fig. 4: den Halter in Draufsicht.

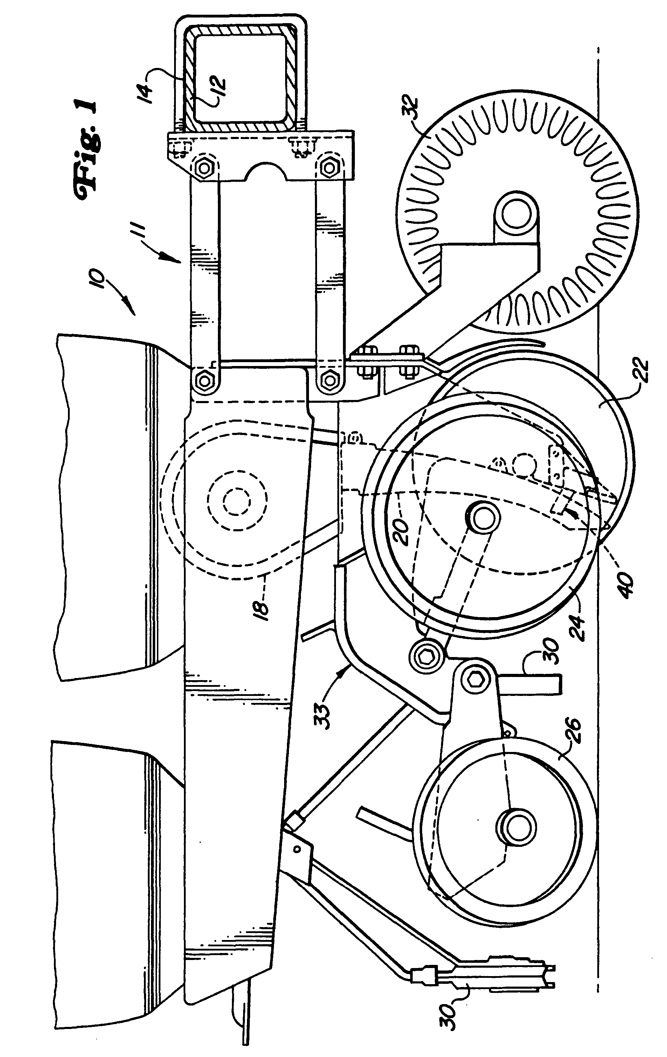

Figur 1 zeigt eine landwirtschaftliche Pflanzeinheit 10. Die Pflanzeinheit 10 ist mit einem Parallellenkergestänge 11 versehen, das in herkömmlicher Weise an einen Werkzeugträger 12 mittels U-Bügeln 14 angeschlossen ist. Die Pflanzeinheit 10 ist mit einem Saatgutbehälter 16 ausgerüstet, der Saatgut einem Dosiergerät 18 zuführt. Das Dosiergerät 18 leitet dosiertes Saatgut zu einem Saatgutrohr 20, um das Saatgut in eine Saatfurche abzulegen. Die Saatfurche wird mittels eines Furchenöffners 22 gebildet. Einstellräder 24 bestimmen bzw. steuern die Eindringtiefe des Furchenöffners 22. Ein Paar von Andrückrädern 26 schließt die Furche, nachdem das Saatgut mittels des Saatgutrohrs 20 darin abgelegt worden ist. Die dargestellte Pflanzeinheit 10 ist auch mit einem Behälter 28 für Schädlingsbekämpfungsmittel ausgerüstet, um Schädlingsbekämpfungsmittel mittels eines Ausbringers 30 auf den Boden abzugeben. Eine dienliche nicht gezeigte Dosiervorrichtung für das Schädlingsbekämpfungsmittel steuert dessen Anwendung. Außerdem ist ein gewelltes Scheibensech 32 vor dem Furchenöffner 22 vorhanden, um diesen in der Öffnung einer Furche zu unterstützen. All die genannten Elemente sind auf einen Rahmen 33 der Pflanzeinheit 10 montiert.

Die vorbeschriebene Pflanzeinheit 10 ist von relativ herkömmlicher Bauweise. Typischerweise wird eine Vielzahl von Pflanzeinheiten 10 auf den Werkzeugträger 12 aufmontiert, so daß ein Landwirt mehr als eine einzige Reihe bei einer Fahrt über das Feld pflanzen kann. Obwohl die vorliegende Erfindung so dargestellt ist, daß sie in einer Pflanzmaschine verwendet wird, kann sie auch in einer anderen Saatgutmachine, z. B. einer Sämaschine, verwendet werden, d. h. daß der Schutz nicht auf die Anwendung bei einer Pflanzmaschine beschränkt sein soll.

Der Rahmen 33 ist mit einem sich nach unten erstreckenden Schutz 34 für das Saatgutrohr 20 versehen. Dieser Schutz 34 ist unmittelbar vor dem Saatgutrohr 20 angeordnet, um dieses in seinem vorderen Bereich gegen einen Kontakt mit dem Boden im Umfeld der Furche zu bewahren. Der Schutz 34 ist mit einer sich quer erstreckenden Schulter 36 versehen.

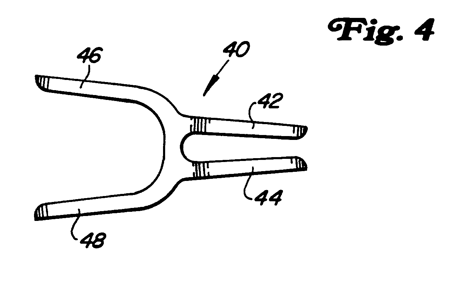

Nach der Erfindung ist ein Halter 40 vorgesehen, der aus einem einstückigen Plastikteil gebildet ist, der eine linke und eine rechte Halteplatte 42 und 44 und ein linkes und ein rechtes Führungselement 46 und 48 aufweist. Beide Halteplatten 42 und 44 sind mit einem Ausschnitt 50 versehen, um die sich quer erstreckende Schulter 36 des Schutzes 34 aufzunehmen. Wie es in Figur 4 gezeigt ist, sind die Halteplatten 42 und 44 nach innen vorgespannt, um fester auf dem Schutz 34 zu klemmen. So könnte es sich auch mit den Führungselementen 46, 48 verhalten.

Der vorliegende Halter 40 des Saatgutrohrs 20 besteht aus einem einfachen Teil, der das normalerweise aus Kunststoff bestehende Saatgutrohr 20 auf der Mittellinie der Saatfurche hält. Auf diese Weise wird Saatgut besser ausgerichtet abgelegt, und das Saatgutrohr 20 wird vor Verschleiß an den Scheiben des Furchenöffners 22 geschützt.

## Patentansprüche

1. Furchenöffner (22) mit mehreren von einem Rahmen (33) getragenen Scharen, die zwischen sich ein Saatgutrohr (20) aufnehmen, und mit einem Halter (40), der:
a) einstückig ausgebildet ist und
b) mit Abstand zwischen den Scharen angeordnet ist.
**dadurch gekennzeichnet, daß** der Halter (40)
c) einerseits Halteplatten (42, 44) zur Festlegung an dem Rahmen (33) und
d) andererseits Führungselemente (46, 48) zur Erfassung des Saatgutrohrs (20) aufweist.

2. Furchenöffner (22) nach Anspruch 1, **dadurch gekennzeichnet, daß** in dem Bereich zwischen den Scharen und in Fahrtrichtung vor dem Saatgutrohr (20) an dem Rahmen (33) ein insbesondere starrer Schutz (34) vorgesehen ist, an dem der Halter (40) angreift.

3. Furchenöffner nach Anspruch 1 oder 2, **dadurch gekennzeichnet, daß** der Halter (40) mit wenigstens einem Ausschnitt (50) versehen ist, der der Übergreifung des Rahmens (33) bzw. des Schutzes (34) dient.

4. Furchenöffner nach einem oder mehreren der vorherigen Ansprüche, **dadurch gekennzeichnet, daß** der Halter (40) aus Kunststoff gebildet ist.

5. Furchenöffner nach einem oder mehreren der vorherigen Ansprüche, **dadurch gekennzeichnet, daß** die Halteplatten (42, 44) und/oder die Führungselemente (46, 48) unter Vorspannung an dem Rahmen (33) und/oder dem Schutz (34) bzw. dem Saatgutrohr (20) angreifen.

6. Furchenöffner nach einem oder mehreren der vorherigen Ansprüche, **dadurch gekennzeichnet, daß** der Schutz (34) eine sich seitwärts erstreckende Schulter (36) aufweist, die der Aufnahme des Halters (40) dient, wobei dieser insbesondere in seinem Ausschnitt (50) die Schulter (36) aufnimmt.

7. Pflanzeinheit 10 mit einem Furchenöffner (22) nach einem oder mehreren der vorherigen Ansprüche, **dadurch gekennzeichnet, daß** die Schare zueinander schräg verlaufend und drehbar angebracht sind und das Saatgutrohr (20) von einem Dosiergerät (18) ausgeht.

8. Pflanzeinheit nach Anspruch 7, **dadurch gekennzeichnet, daß** dem Furchenöffner (22) ein Scheibensech (32) vor- und Andrückräder (26) nachgeschaltet sind.

## Claims

1. A furrow opener (22) with a plurality of shares carried by a frame (33), which receive a seed tube (20) therebetween, and with a holder (40), which:
a) is formed in one piece and
b) is arranged spaced between the shares,
**characterized in that** the holder (40)
c) comprises on the one hand retaining plates (42, 44) for fixing on to the frame (33) and
d) on the other hand guide elements (46, 48) for receiving the seed tube (20).

2. A furrow opener (22) according to claim 1, **characterized in that** a guard (34), especially a rigid guard, on which the holder (40) engages, is provided on the frame (33) in the region between the shares and in advance of the seed tube (20) in the direction of travel.

3. A furrow opener according to claim 1 or 2, **characterized in that** the holder (40) is provided with at least one recess (50) which serves for engagement over the frame (33) or the guard (34).

4. A furrow opener according to one or more of the preceding claims, **characterized in that** the holder (40) is made of plastics material.

5. A furrow opener according to one or more of the preceding claims, **characterized in that** the retaining plates (42, 44) and/or the guide elements (46, 48) engage with pre-stress on the frame (33) and/or the guard (34) or the seed tube (20) respectively.

6. A furrow opener (22) according to one or more of the preceding claims, **characterized in that** the guard (34) has a laterally extending shoulder (36) which serves to receive the holder (40), wherein this in particular receives the shoulder (36) in its recess (50).

7. A planter unit 10 with a furrow opener (22) according to one or more of the preceding claims, **characterized in that** the shares are fitted to run obliquely towards one another and to rotate and the seed tube (20) comes from a metering device (18).

8. A planter unit according to claim 7, **characterized in that** a disc coulter (32) precedes and pressing wheels (26) follow the furrow opener (22).

## Revendications

1. Dispositif (22) traceur de sillons comportant plusieurs socs portés par un cadre (33) et entre lesquels est disposé un tube (20) d'amenée de graines, et un support (40), qui :
a) est formé d'un seul tenant, et
b) est disposé à distance entre les socs,
**caractérisé en ce que** le support (40) comporte
c) d'une part des plaques de retenue (42,44) pour la fixation sur le cadre (33), et
d) d'autre part des éléments de guidage (46,48) servant à saisir le tube (20) d'amenée de graines.

2. Dispositif (22) traceur de sillons selon la revendication 1, **caractérisé en ce qu'**un élément de protection notamment rigide (34), sur lequel est monté le support (40), est prévu sur le cadre (33) dans la zone située entre les socs et en avant du tube (20) d'amenée des graines, dans la direction de déplacement.

3. Dispositif traceur de sillons selon la revendication 1 ou 2, **caractérisé en ce que** le support (40) est équipé d'au moins une partie (50), qui est destinée à s'engager par-dessus le cadre (33) ou l'élément de protection (34).

4. Dispositif traceur de sillons selon une ou plusieurs des revendications précédentes, **caractérisé en ce que** le support (40) est réalisé en matière plastique.

5. Dispositif traceur de sillons selon une ou plusieurs des revendications précédentes, **caractérisé en ce que** les plaques de retenue (42,44) et/ou les éléments de guidage (46,48) sont accrochées sous précontrainte au cadre (33) et/ou à l'élément de protection (34) ou au tube (20) d'amenée de graines.

6. Dispositif traceur de sillons selon une ou plusieurs des revendications précédentes, **caractérisé en ce que** l'élément de protection (34) comporte un épaulement (36), qui s'étend latéralement et sert à recevoir le support (40), ce dernier logeant notamment dans sa découpe (50) l'épaulement (36).

7. Unité de plantation (10) comportant un dispositif traceur de sillons (22) selon une ou plusieurs des revendications précédentes, **caractérisée en ce que** les socs sont montés de manière à être obliques les uns par rapport aux autres et de manière à pouvoir tourner et que le tube (20) d'amenée des graines s'étend à partir d'un appareil de dosage (18).

8. Unité de plantation selon la revendication 7, **caractérisée en ce qu'**un coutre circulaire (32) est disposé respectivement en amont et en aval de roues de pression (26) .
